# EUROPEAN PATENT APPLICATION

(11) **EP 2 148 068 A1**
(43) Date of publication of application: **27.01.2010**
(21) Application number: 08764950.5
(22) Date of filing: 26.05.2008
(51) Int. Cl.: F02D 17/00, F02D 29/02, F02D 41/06, F02D 45/00

(54) **STARTER FOR INTERNAL-COMBUSTION ENGINE**

(71) Applicant: Toyota Jidosha Kabushiki Kaisha, Toyota-shi, Aichi 471-8571 (JP)
(72) Inventor: The designation of the inventor has not yet been filed
(74) Representative: Intes, Didier Gérard André
(86) International application number: PCT/JP2008/060094
(87) International publication number: WO 2009/144830

(57) **Abstract**

In a device for starting an engine, in which when the engine is restarted from idling stop, a cylinder which is restarted initially among all cylinders is determined on the basis of a piston stopping position of each cylinder in the idling stop, if there is a specified cylinder which is judged to cause a misfire when the specified cylinder is restarted initially among all cylinders, a piston stopping position of the specified cylinder in the idling stop is controlled such that the specified cylinder does not become a cylinder which is restarted initially among all cylinders.

## Description

### TECHNICAL FIELD

The present invention relates to a device for starting an engine.

### BACKGROUND ART

In a vehicle with an engine, in order to reduce fuel consumption, an "idling stop" in which idling of the engine is stopped while a vehicle is stopped at a stoplight or the like, may be carried out. In an engine restarting from such an idling stop, the engine must be able to immediately restart. In the restarting of a diesel engine, fuel injection is usually started in a cylinder of which the piston was stopped in a compression stroke. In such a case, to avoid wasting electrical power, it has been suggested to control electric current supplied to glow-plugs (refer to, for example, Japanese Unexamined Patent Publications Nos. 2004-176569, 8-28319, 2005-16505, and 2002-349370).

### DISCLOSURE OF THE INVENTION

In the above art, when the electric current supplied to glow-plugs is controlled and fuel injection is started in a cylinder of which the piston has stopped in a compression stroke to restart the engine, if the cylinder is not easy to start because of the snapping of a wire of a glow-plug or the like, a misfire could occur. In this case, a large amount of unburned fuel is discharged and the completion of restarting is delayed.

Therefore, an object of the present invention is to provide a device for starting an engine, in which even if there is a cylinder in which starting is difficult, a misfire can be prevented and thus a efficient restarting from the idling stop can be achieved.

According to claim 1 of the present invention, there is provided a device for starting an engine, in which when the engine is restarted from idling stop, a cylinder which is restarted initially among all cylinders is determined on the basis of a piston stopping position of each cylinder in the idling stop, **characterized in that** if there is a specified cylinder which is judged to cause a misfire when the specified cylinder is restarted initially among all cylinders, a piston stopping position of the specified cylinder in the idling stop is controlled such that the specified cylinder does not become a cylinder which is restarted initially among all cylinders.

According to claim 2 of the present invention, there is provided a device for starting an engine of claim 1, **characterized in that** the piston stopping position of the specified cylinder in the idling stop is controlled such that the specified cylinder does not become a cylinder which is restarted initially among all cylinders, but becomes a cylinder which is restarted lastly among all cylinders.

According to claim 3 of the present invention, there is provided a device for starting an engine of claim 1 or 2, **characterized in that** although the piston stopping position of the specified cylinder in the idling stop was controlled, when the specified cylinder became a cylinder which is restarted initially among all cylinders, fuel is not supplied in the specified cylinder and a cylinder in which fuel is supplied next to the specified cylinder is restarted initially.

According to claim 4 of the present invention, there is provided a device for starting an engine of any one of claims 1-3, **characterized in that** the engine is a diesel engine and if there is the specified cylinder, a fuel injection pressure is increased when the engine is restarted.

According to claim 5 of the present invention, there is provided a device for starting an engine of any one of claims 1-4, **characterized in that** if there is the specified cylinder, an intake air temperature within the cylinders during an intake stroke is increased when the engine is restarted.

According to the device for starting an engine of claim 1, if there is a specified cylinder which is judged to cause a misfire when the specified cylinder is restarted initially among all cylinders, a piston stopping position of the specified cylinder in the idling stop is controlled such that the specified cylinder does not become a cylinder which is restarted initially among all cylinders. Therefore, even if there is the specified cylinder in which a starting is difficult, when the engine is restarted, the specified cylinder is not started initially, but is started after the other cylinder is started and an engine speed increases more highly. Thus, a misfire is restrained, the first starting of the other cylinder is certainly realized, and a good starting performance can be ensured. A discharge of unburned fuel caused by a misfire in the specified cylinder can be also restrained.

According to the device for starting an engine of claim 2, in the device for starting an engine of claim 1, the piston stopping position of the specified cylinder in the idling stop is controlled such that the specified cylinder does not become a cylinder which is restarted initially among all cylinders, but becomes a cylinder which is restarted lastly among all cylinders.
Therefore, even if there is the specified cylinder in which a starting is difficult, when the engine is restarted, the specified cylinder is not started initially, but is started after all the other cylinders are started and an engine speed increases most highly. Thus, a misfire is surely restrained, the first starting of the other cylinder is certainly realized, and a better starting performance can be ensured. A discharge of unburned fuel caused by a misfire in the specified cylinder can be also certainly restrained.

According to the device for starting an engine of claim 3, in the device for starting an engine of claim 1 or 2, although the piston stopping position of the specified cylinder in the idling stop was controlled, when the specified cylinder became a cylinder which is restarted initially among all cylinders, fuel is not supplied in the specified cylinder and a cylinder in which fuel is supplied next to the specified cylinder is restarted initially. Therefore, when the engine is restarted, the specified cylinder is not started initially, but is started after all the other cylinders are started and an engine speed increases most highly. Thus, a misfire is certainly restrained. A starting performance deteriorates slightly because the first restarting of the specified cylinder is avoided, but relatively good starting performance can be ensured. A discharge of unburned fuel caused by a misfire in the specified cylinder can be also sufficiently restrained.

According to the device for starting an engine of claim 4, in the device for starting an engine of any one of claims 1-3, the engine is a diesel engine and if there is the specified cylinder, a fuel injection pressure is increased when the engine is restarted. Therefore, atomization of injected fuel is promoted and a starting of the specified cylinder is improved. Thus, a misfire is further restrained, and better starting performance can be ensured. A discharge of unburned fuel caused by a misfire in the specified cylinder can be also further restrained.

According to the device for starting an engine of claim 5, in the device for starting an engine of any one of claims 1-4, if there is the specified cylinder, an intake air temperature within the cylinders during an intake stroke is increased by delay of opening time of the intake valve or the like when the engine is restarted. Therefore, a starting of the specified cylinder is improved and a misfire is further restrained, and a better starting performance can be ensured. A discharge of unburned fuel caused by a misfire in the specified cylinder can be also further restrained.

### BRIEF DESCRIPTION OF THE DRAWINGS

Fig. 1 is a schematic view showing a diesel engine in which a device for starting an engine according to the present invention is mounted;
Fig. 2 is a part of a first flowchart showing a control for restarting from the idling stop which is carried out by the device for starting an engine according to the present invention;
Fig. 3 is a remainder of the first flowchart of Fig. 2; and
Fig. 4 is a second flowchart for specifying a cylinder with a poor starting performance.

### BEST MODE FOR CARRYING OUT THE INVENTION

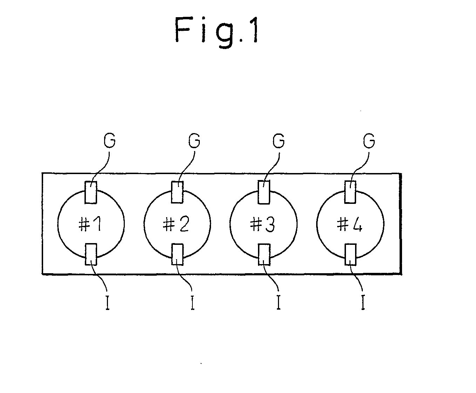

Fig. 1 is a schematic view showing a diesel engine in which a device for starting an engine according to the present invention is mounted. In Fig. 1, the diesel engine has, for example, four cylinders. In No. 1 cylinder, No. 2 cylinder, No. 3 cylinder, and No. 4 cylinder, a fuel injector (I) for injecting fuel and a glow plug (G) for promoting an atomization of injected fuel are arranged respectively. In the present diesel engine, an order of fuel injection is, for example, No.1 cylinder - No. 3 cylinder - No.4 cylinder - No.2 cylinder. Fuel pressurized by a fuel pump driven by the engine is accumulated within a common rail for all cylinders and the high pressure fuel within the common rail is injected within each cylinder by each fuel injector (I). The engine also comprises a variable valve timing mechanism and can vary at least an opening time of intake valve in stages or without stages.

In the present diesel engine, while the vehicle is stopped at a stoplight or the like, an idling stop in which idling is stopped is carried out to save fuel. When the engine is restarted from such an idling stop, the restarting must be finished immediately such that the vehicle can start immediately. For the purpose, a fuel injection starts from a cylinder in which the piston is stopped in a compression stroke (preferably, in a first half of a compression stroke) in the restarting of the engine. Therefore, the cylinder in which the piston is stopped in a compression stroke is memorized when the idling is stopped.

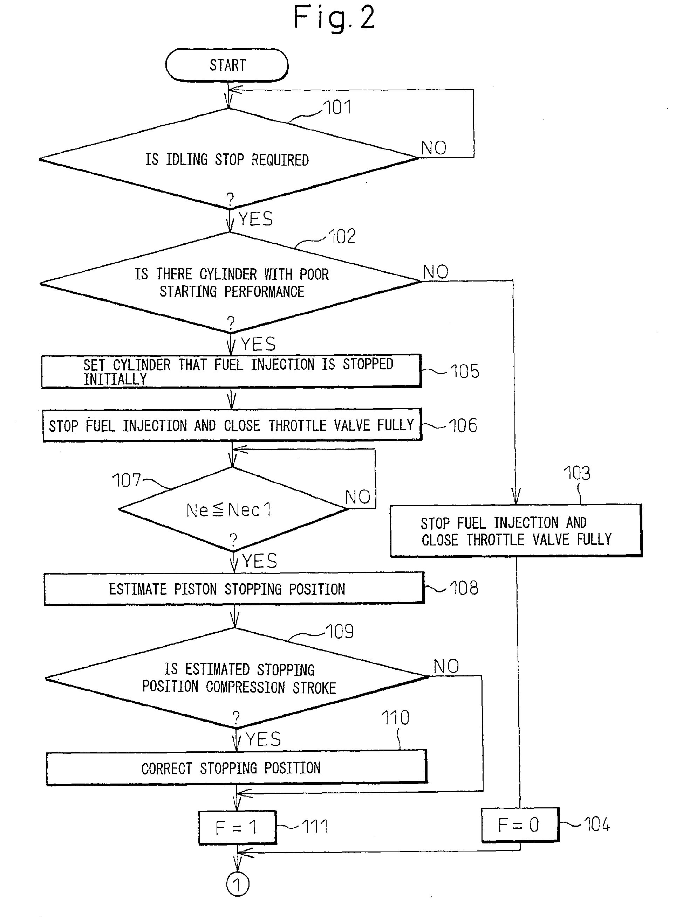

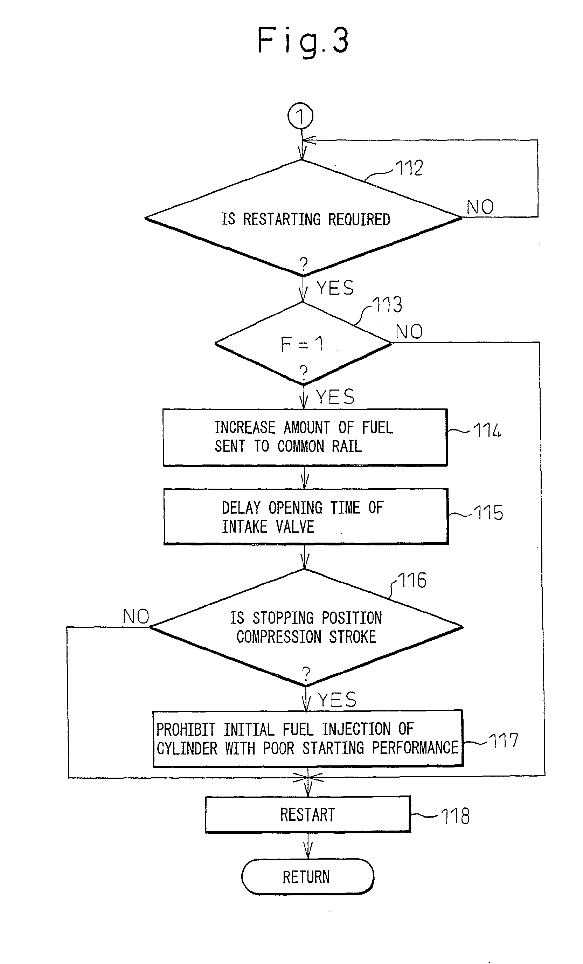

However, in the case where the cylinder in which the piston is stopped in a compression stroke is not easy to be started because of the snapping of a wire of the glow plug or the like, if this cylinder was tried to be started initially among all the cylinders, a misfire might be caused because of the starting at the lowest engine speed. In this case, not only a large amount of unburned fuel is not exhausted from the misfire cylinder, but the engine start is also delayed. To solve this problem, the device of the present embodiment restarts the diesel engine from the idling stop according to a first flowchart shown in Figs. 2 and 3.

First, at step 101, it is determined if the idling stop is required. This is repeated until the idling stop is required. When the idling stop is required, it is determined if there is a cylinder with a poor starting performance at step 102. This is explained in detail later. The cylinder with a poor starting performance is a cylinder which is judged to cause a misfire because of the starting in the lowest engine speed when the cylinder is restarted initially among all the cylinders. When the result of step 102 is negative, at step 103, a fuel injection is stopped at once whichever cylinder fuel is injected into, the throttle valve is fully closed when the throttle valve is not fully closed, and the idling stop is carried out. The throttle valve is not mechanically connected with the accelerator pedal and is driven by a step motor or the like. Next, at step 104, a flag (F) is set (0).

On the other hand, when the result at step 102 is positive, at step 105, a cylinder in which a fuel injection is stopped initially is set such that in the idling stop, the piston of the cylinder with a poor starting performance is stopped in an intake stroke or an exhaust stroke, preferably in an expansion stroke because the cylinder with a poor starting performance is started finally among all the cylinders in the restarting. Accordingly, in the idling stop, the piston of the cylinder with a poor starting performance is not stopped in a compression stroke and the cylinder with a poor starting performance is not started initially among all the cylinders in the restarting.

Thus, the fuel injection is stopped in turn from the set cylinder and the revolution of the engine is stopped by a friction force after the fuel injections for all the cylinders are stopped. The number (is not always a whole number) of the revolution times of the engine from the stopping of the fuel injections of all the cylinders until the stopping of the engine revolution can be estimated or can be measured in advance. Accordingly, to stop the piston of the cylinder with a poor starting performance in the desired stroke, a cylinder in which the fuel injection should be stopped initially can be determined.

Next, at step 106, the fuel injection is stopped in turn from the determined cylinder, the throttle valve is fully closed when the throttle valve is not fully closed, and the idling stop is carried out. Next, at step 107, it is determined if the engine speed (Ne) which is drop successively because of the stopping of the fuel injections of all the cylinders reaches a first set engine speed (Nec1). For example, the first set engine speed (Nec1) is a half of the idling engine speed. This is repeated until the result is positive. When the engine speed (Ne) reaches the first set engine speed (Nec1), at step 108, the stopping position of the piston of the cylinder with a poor starting performance is estimated again on the basis of a dropping rate of the engine speed at this time or the like.

Next, at step 109, it is determined if the estimated stopping position of the piston of the cylinder with a poor starting performance is a compression stroke. When the result is negative, the routine goes to step 111. However, when the result at step 109 is positive, at step 110, the stopping position of the piston of the cylinder with a poor starting performance is made other than a compression stroke by a control for correcting the stopping position. As this control, the starter motor is driven to delay the stopping of the engine revolution, pressurized fuel is sent to the common rail for all the cylinders by the fuel pump (or an amount of pressurized fuel that is sent to the common rail is increased when the pressurized fuel is sent to the common rail) to advance the stopping of the engine revolution, or an amount of electric power generated by the alternator is increased to advance the stopping of the engine revolution. Of course, to stop the piston of the cylinder with a poor starting performance in a desired stroke (for example, an expansion stroke), the control for correcting the stopping position may be used. Next, at step 111, the flag (F) is set (1).

Next, at step 112, it is determined if the restarting from the idling stop is required. This is repeated until the result is positive. When the result at step 112 is positive, it is determined if the flag is (1) at step 113. When the flag is not (1), there is no cylinder with a poor starting performance and at step 118, from the cylinder in which the piston is stopped in a compression stroke, the glow plug (G) is operated and the fuel injection is started to restart the engine.

On the other hand, when the result at step 113 is positive, there is a cylinder with a poor starting performance and it is preferable to restrain a misfire of the cylinder. For the purpose, at step 114, an amount of fuel pressurized by the fuel pump that is sent to the common rail is increased (preferably, the amount of fuel pressurized by the fuel pump is made maximum) to promote the atomization of the injected fuel with the increased injection pressure in each cylinder. Furthermore, at step 115, the opening time of the intake valve is delayed to increase the temperature of the intake air supplied to each cylinder in the intake stroke.

Next, at step 116, it is determined if the stopping position of the piston of the cylinder with a poor starting performance is a compression stroke. When the result is negative, at step 118, from the cylinder in which the piston is stopped in the compression stroke in the idling stop, the glow plug (G) is operated and the fuel injection is started to restart the engine. Therefore, in the restarting of the engine, because the cylinder with a poor starting performance is not started initially among all the cylinders and is started after the engine speed increases with the starting of the other cylinder, a misfire of the cylinder with a poor starting performance can be restrained. Moreover, the initial starting of the other cylinder can be certainly realized to ensure a good starting of the engine and it can be prevented that the cylinder with a poor starting performance causes a misfire and the unburned fuel is exhausted from the cylinder.

If the stopping position of the piston of the cylinder with a poor starting performance is controlled to be an expansion stroke, in the restarting of the engine, because the cylinder with a poor starting performance is not started initially among all the cylinders and is started after the engine speed increases in maximum with the starting of all the other cylinders, a misfire of the cylinder with a poor starting performance can be certainly restrained. Moreover, the initial starting of all the other cylinders can be certainly realized to ensure a better starting of the engine and it can be certainly prevented that the cylinder with a poor starting performance causes a misfire and the unburned fuel is exhausted from the cylinder.

On the other hand, in the idling stop, when the actual stopping position of the piston of the cylinder with a poor starting performance is a compression stroke although the stopping position of the piston is controlled not to become a compression stroke, the result at step 116 is positive and at step 117, the initial fuel injection of the cylinder with a poor starting performance is prohibited and at step 118, from the cylinder in which the fuel is injected next to the cylinder with a poor starting performance, namely the cylinder in which the piston is stopped in an intake stroke, the glow plug (G) is operated and the fuel injection is started to restart the engine.

Accordingly, in the restarting of the engine, because the cylinder with a poor starting performance is not started initially among all the cylinders and is started after the engine speed increases in maximum with the starting of all the other cylinders, a misfire of the cylinder with a poor starting performance is sufficiently restrained. Moreover, the initial starting of all of the other cylinders can be realized to ensure a relatively good starting of the engine although the initial starting of the cylinder with a poor starting performance is prohibited and the engine starting deteriorates slightly. It can be also prevented that the cylinder with a poor starting performance causes a misfire and the unburned fuel is exhausted from the cylinder.

At step 114, in the restarting of the engine, an amount of fuel pressurized by the fuel pump that is sent to the common rail is increased. Accordingly, when the fuel is injected in a later starting cylinder, the fuel pump has sent fuel to the common rail several times. Further, an amount of fuel sent by the fuel pump per time is increased gradually with increasing of the engine speed. Thus, in a later fuel injection, the fuel pressure within the common rail has become sufficiently high to increase the fuel injection pressure. Accordingly, when the cylinder with a poor starting performance is started later, the atomization of the injected fuel in the cylinder is promoted more and thus a misfire in the cylinder is hardly caused. Thus, a better starting of the engine can be ensured and it can be certainly prevented that the cylinder with a poor starting performance causes a misfire and the unburned fuel is exhausted from the cylinder.

At step 115, the opening time of the intake valve is delayed in the restarting of the engine. Therefore, the temperature of the intake air supplied into each cylinder in the intake stroke is increased. This is meaningless when the stopping position of the piston of the cylinder with a poor starting performance is controlled to be an intake stroke. However, when the stopping position of the piston of the cylinder with a poor starting performance is controlled to be an exhaust stroke or an expansion stroke, the temperature in the cylinder with a poor starting performance can be increased in the fuel injection time of the restarting, and thus a better starting of the engine can be ensured and it can be certainly prevented that the cylinder with a poor starting performance causes a misfire and the unburned fuel is exhausted from the cylinder.

In the first flowchart, the control for correcting the stopping position from step 107 to step 110, the control for increasing an amount of fuel pressurized by the fuel pump that is sent to the common rail at step 114, the control for delaying the opening time of the intake valve at step 115, and the prohibition of the initial fuel injection in the cylinder with a poor starting performance at steps 116 and 117 can be optionally omitted.

When a glow plug (G) does not function normally because of the snapping of a wire or the like, the cylinder with this glow plug (G) becomes a cylinder with a poor starting performance. Accordingly, if an electric current in each glow plug is measured, an abnormal glow plug can be specified. If a gate circuit (GDU) is arranged in the control circuit of each glow plug, an abnormal glow plug can be specified. Thus, when it is determined that a glow plug of a specific cylinder is abnormal, it can be determined that there is a cylinder with a poor starting performance at step 102 of the first flowchart shown in Figs. 2 and 3.

When a cylinder with a glow plug that functions normally is started initially among all the cylinders, it may cause a misfire according to the cylinder, for example if an amount of injected fuel is slightly smaller than the required amount. Thus, a cylinder with a slight abnormality that causes no problem in usual operations may become a cylinder with a poor starting performance in which a misfire is caused only when the cylinder is started initially among all the cylinders.

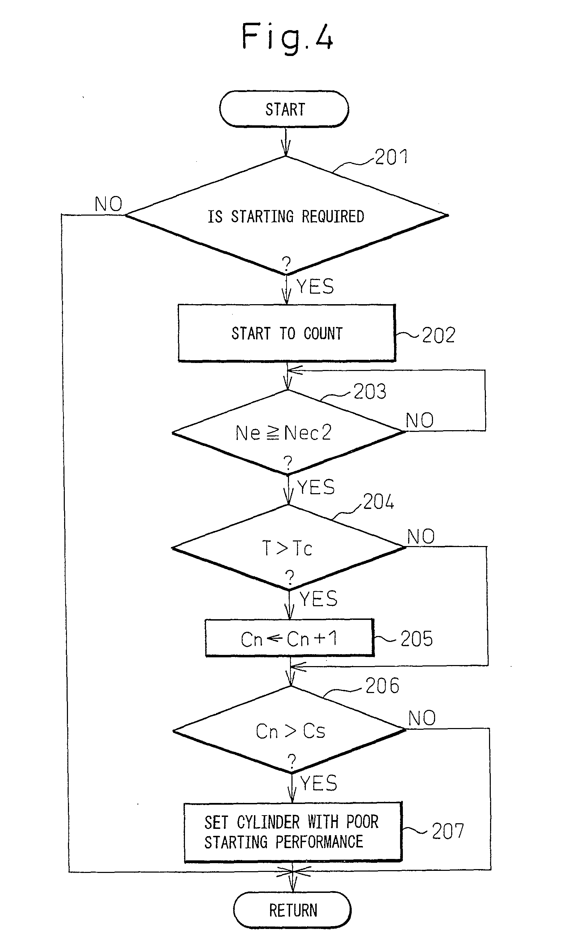

Fig. 4 is a second flowchart for specifying such a cylinder with a poor starting performance by which it is determined if there is a cylinder with a poor starting performance at step 102 of the first flowchart shown Figs. 2 and 3. First, at step 201, it is determined if the restarting from the normal engine stopping other than the restarting from the idling stop is required. When the result is negative, the routine is stopped. However, when the result at step 201 is positive, a timer starts to count at step 202.

Next, at step 203, it is determined if the engine speed (Ne) reaches a second set engine speed (Nec2). The second set engine speed (Nec2) is for example a half of the idling engine speed and represents the end of the engine starting. This is repeated until the result is positive. When the result at step 203 is positive, it is determined if a period (T) counted by the timer until the engine starting is finished is longer than a set period (Tc) at step 204. When the result is negative, the routine goes to step 206. However, when the result at step 204 is positive, at step 205, it is determined that a cylinder which was tried to be started initially among all the cylinders caused a misfire in the engine starting and a count value (Cn) for this cylinder which caused a misfire is incremented by "1" (one). Thereafter, the routine goes to step 206.

At step 206, it is determined if each count value (C1, C2, C3, C4) for each cylinder is larger than a set value (Cs). When the result is negative, the routine is stopped. When there is the count value (Cn) that is larger than the set value (Cs), the cylinder of this count value (Cn) has repeated set times to cause a misfire when the cylinder was tried to be started initially among all the cylinders in the engine starting, and thus at step 207, this cylinder is set as cylinder with a poor starting performance.

The second flowchart shown in Fig. 4 specifies a cylinder with a poor starting performance in the usual engine starting. However, in the restarting from the idling stop, when a period until the engine finishes to start is longer than a set period (is shorter than the set period at step 204), it is determined that a cylinder which was tried to be started initially among all the cylinders caused a misfire and the count value (Cn) of this cylinder may be incremented.

In the above embodiment, the engine is a diesel engine. In the restarting from the idling stop, a cylinder in which the piston stops in a compression stroke is started initially. However, this does not limit to the present invention. For example, a cylinder in which the piston stops between a second half of an intake stroke and a first half of a compression stroke may be started initially. Besides, a cylinder in which the piston stops in an intake stroke may be started initially.

In a gasoline engine which carries out a stratified charge combustion by fuel injection in a compression stroke, a cylinder which is started initially can be set similarly with the diesel engine. However, in a gasoline engine which carries an uniform charge combustion, because fuel is supplied into the cylinder in an intake stroke, in the restarting, a cylinder in which the piston stops within 180 degrees crank angle range immediately before the fuel injection time (for example, when fuel is injected into the cylinder or into the intake port in an intake stroke, or when fuel is injected into the intake port before an intake stroke) is preferably started initially among all the cylinders.

For example, when the fuel injection starts in a first half of an intake stroke, a cylinder in which the piston stops in an exhaust stroke is preferably started initially, and when the fuel injection starts in a second half of an intake stroke, a cylinder in which the piston stops in an exhaust stroke or between a first half of an exhaust stroke and a first half of an intake stroke is preferably started initially.

## Claims

1. A device for starting an engine, in which when said engine is restarted from idling stop, a cylinder which is restarted initially among all cylinders is determined on the basis of a piston stopping position of each cylinder in the idling stop, **characterized in that** if there is a specified cylinder which is judged to cause a misfire when said specified cylinder is restarted initially among all cylinders, a piston stopping position of said specified cylinder in the idling stop is controlled such that said specified cylinder does not become a cylinder which is restarted initially among all cylinders.

2. A device according to claim 1, **characterized in that** the piston stopping position of said specified cylinder in the idling stop is controlled such that said specified cylinder does not become a cylinder which is restarted initially among all cylinders but becomes a cylinder which is restarted lastly among all cylinders.

3. A device according to claim 1 or 2, **characterized in that** although the piston stopping position of said specified cylinder in the idling stop was controlled, when said specified cylinder became a cylinder which is restarted initially among all cylinders, fuel is not supplied in said specified cylinder and a cylinder in which fuel is supplied next to said specified cylinder is restarted initially.

4. A device according to any one of claims 1 to 3, **characterized in that** the engine is a diesel engine and if there is said specified cylinder, a fuel injection pressure is increased when the engine is restarted.

5. A device according to any one of claims 1 to 4, **characterized in that** if there is said specified cylinder, an intake air temperature within the cylinders during an intake stroke is increased when the engine is restarted.
